(19) Europäisches Patentamt / European Patent Office / Office européen des brevets

(11) **EP 4 506 658 A1**

(12) **EUROPEAN PATENT APPLICATION**

(43) Date of publication:
**12.02.2025   Bulletin 2025/07**

(21) Application number: **23189901.4**

(22) Date of filing: **06.08.2023**

(51) International Patent Classification (IPC):
**G01C 5/00** *(2006.01)*      **G01C 15/00** *(2006.01)*

(52) Cooperative Patent Classification (CPC):
**G01C 5/00; G01C 15/002; G01S 17/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hilti Aktiengesellschaft**
**9494 Schaan (LI)**

(72) Inventors:
• **Gloor, Thomas**
  **9495 Triesen (LI)**

• **Reyes-Aviles, Fernando**
  **8020 Graz (AT)**
• **Arth, Clemens**
  **8111 Gratwein-Straßengel (AT)**
• **Pfeifer, Juergen**
  **88605 Sauldorf (DE)**

(74) Representative: **Hilti Aktiengesellschaft**
**Corporate Intellectual Property**
**Feldkircherstrasse 100**
**Postfach 333**
**9494 Schaan (LI)**

(54)    **METHOD FOR CONTROLLING A SURVEYING INSTRUMENT**

(57)    Method for controlling a surveying instrument wherein, while rotating the surveying instrument about its rotating axis, a computer program, which has computer-executable instructions for performing a method for adapting the orientation of the surveying instrument, is executed, the method for adapting the orientation of the surveying instrument comprises the steps:

■ Determining a vertical difference to a target height ($h_0$) via the supervisory device,

■ Evaluating the vertical difference to at least one predetermined first vertical range ($VR_1$) via the supervisory device,

■ Based on the evaluation, instructing the surveying instrument to adapt the orientation of the surveying instrument in the vertical direction in case that the vertical difference to the target height ($h_0$) is larger than the first vertical range ($VR_1$).

FIG. 5

EP 4 506 658 A1

## Description

The present invention relates to a method for controlling a surveying instrument according to the definition of claim 1, to a computer program product according to the definition of claim 14, and to a system for controlling a surveying instrument according to the definition of claim 15.

## Background of the invention

Robotic total stations are used in construction industries to take individual, highly accurate measurements within a worksite environment, using a highly precise electronic distance measuring device (EDM) and highly accurate motors to rotate this EDM. Centered within a robotic total station is its right-handed coordinate frame. The orientation of the coordinate frame is usually such that the devices x-axis pointing towards right, y-axis pointing towards the floor and z-axis pointing into forward direction.

A single measurement of a 3D measuring point, delivered by a robotic total station is composed of a triplet of values, namely the angular rotation around the y-axis of the robotic total station, the angular rotation around the x-axis of the robotic total station, and a distance measurement given by the EDM, relating a 3D measuring point in the worksite environment uniquely to the robotic total station. The afore-mentioned angular rotation values around the y-axis and x-axis are referred to as horizontal angle (HA) and, respectively, vertical angle (VA). Both values can be controlled and set by the robotic total station to control the pointing direction of the EDM.

Defining the location of a sample to be taken is usually done by the user, pointing the EDM into a certain direction and triggering the measurement process. In such a manual approach, the user has to take care about the suitability of the location of the sample, to avoid measurement errors due to, e.g., improper target surface properties or occlusions.

In an automatic workflow, the robotic total station operates autonomously and the device motion, respectively the sampling process, follows a particular pattern. The EDM is set to constantly take measurements during this process, accumulating triplets of measurement values for each individual sample, i.e., HA, VA, and distance measurements. Based on a set of parameters and the physical capabilities of the robotic total station, the sampling can be controlled to happen more or less frequently, similarly the device may rotate along the horizontal axis with varying velocity.

As there is no qualitative assessment of the suitability of a certain measuring point or region in the worksite environment to take a measurement is available, an automatic workflow can easily get trapped to sample at discontinuities in the worksite environment, such as corners or edges of a wall for example. In other cases, the EDM may not deliver measurement values at all, for instance on shiny or even transparent surfaces, such as windows for example.

As a first step in practical applications, a robotic total station needs to be placed in a worksite environment, however, without having an accurate reference to the worksite environment. In other words, the position and orientation of the robotic total station within the worksite environment is not known. This position and orientation, also called a pose, needs to be determined before any further task can be conducted in a meaningful context. A pose essentially is a description of the position and orientation of a point with respect to a given coordinate frame in 6 degrees of freedom (DoF). The position makes up 3 DoF, i.e., x, y, and z, while the orientation is described within another 3 DoF, respectively pan, tilt and roll, or, respectively, the rotation angle around the three axes x, y, and z.

One crucial requirement to calculate the pose is the availability of a reference model of the worksite environment with a known coordinate frame, through which the pose of the robotic total station can be determined. For simplicity, the coordinate frame of the reference model is assumed to have the same alignment as the robotic total station in terms of the x/y/z-axes pointing direction. However, the complexity of determining the pose of a robotic total station can be simplified by taking several properties of a robotic total station and fundamental mathematical concepts into account.

Known workflows to determine the pose of a robotic total station are based on manually or automatically taking measurement samples in the worksite environment. Based on a scalable mathematical equation system, the pose can be calculated with a varying degree of precision, depending on the amount of sampling information considered. To solve the pose calculation, a minimum number of samples needs to be taken, while an increasing number of samples usually leads to the formation of an overdetermined mathematical equation system and an overall improved accuracy of the pose calculation.

## Summary of the invention

Therefore, what is desired is a method for controlling a surveying instrument to increase the quality of target-free measurements performed by the surveying instrument on bounding surfaces of a worksite environment.

These objects are achieved by realizing the features of the independent claims. Features which further develop the invention in an advantageous manner are described in the dependent claims.

According to an aspect of the present invention, there is provided a method for controlling a surveying instrument characterized in that, while rotating the surveying instrument about the rotating axis, a computer program, which has computer-executable instructions for performing a method for adapting the orientation of the surveying instrument in the vertical direction, is executed, the method for adapting the orientation of the surveying instrument comprises the steps:

- Determining a vertical difference to a target height via the supervisory device,
- Evaluating the vertical difference to at least one predetermined first vertical range via the supervisory device,
- Based on the evaluation, instructing the surveying instrument to adapt the orientation of the surveying instrument in the vertical direction in case that the vertical difference is larger than the first vertical range.

The method for controlling a surveying instrument is performed by the surveying instrument, which includes a distance measuring device, an angle measuring device, an azimuth motor device, an elevation motor device, and a control device, and by a supervisory device, which has evaluation, data processing and/or control functionality and is connected communicatively via a communication link to the surveying instrument. The supervisory device can be integrated in the surveying instrument, in a remote controller connected to the surveying instrument, or in any other processing circuit or processor which is communicatively connected wireless to the surveying instrument.

While the surveying instrument is rotating about its rotating axis, a computer program, called the height controller, is executed by the supervisory device. In a first step, the height controller determines a vertical difference to a target height, and in a second step, the vertical difference is evaluated by the height controller to at least one first vertical range. Based on the evaluation, the surveying instrument is instructed to adapt the orientation of the surveying instrument in the vertical direction in a third step, in case that the vertical difference to the target height is larger than the first vertical range. The orientation of the surveying instrument in the vertical direction can be adapted with or without an adaption of the rotation about the rotating axis. By using the height controller, the position of the measuring points used for measurements can be driven to the desired target height as close as possible.

Preferably, the orientation of the surveying instrument in the vertical direction is kept in case that the vertical difference to the target height is smaller than the first vertical range. As long as the vertical difference to the target height is smaller than the first vertical range, there is no need to adapt the orientation of the surveying instrument in the vertical direction.

Preferably, the vertical difference to the target height is one of a height difference between a vertical distance and the target height, a relative height difference between the height difference and a distance, and a vertical angle difference between a vertical angle and a vertical angle corresponding to the target height.

Particularly preferred, the vertical distance and/or the distance and/or the vertical angle are determined from at least one of the previous measurements performed by the surveying instrument.

Particularly preferred, the distance to calculate the relative height difference is determined from at least one measured distance of the previous measurements, from at least one horizontal distance in the horizontal plane of the previous measurements, and/or from a predicted distance estimated from a model of the worksite environment, the model being configured for model predictive control.

Preferably, in case that the vertical difference to the target height is larger than the first vertical range, the surveying instrument is instructed to pivot about the pivoting axis with a vertical velocity. The orientation of the surveying instrument in the vertical direction can be adapted with or without an adaption of the rotation about the rotating axis.

In a first preferred version, the vertical velocity is selected to be proportional to the vertical difference. By adapting the orientation of the surveying instrument in the vertical direction with a vertical velocity that is proportional to the vertical difference, the orientation can be adapted as close as possible to the target height.

In a second preferred version, the vertical velocity is selected according to a proportional-integral-derivative-controller using the vertical difference as error value. By using a proportional-integral-derivative-controller for adapting the orientation of the surveying instrument in the vertical direction, the orientation of the surveying instrument can be adapted as close as possible to the target height.

In a preferred version, the vertical difference to the target height is additionally evaluated to at least one predetermined second vertical range by the supervisory device, the second vertical range being larger than the first vertical range. By evaluating the vertical difference to the second vertical range that is larger than the first vertical range, the orientation of the surveying instrument in the vertical direction can be adapted with an adaption of the rotation about the rotating axis.

In a first preferred version, the surveying instrument is instructed to reduce the horizontal velocity of the surveying instrument about the rotating axis in case that the vertical difference to the target height is larger than the at least one second vertical range. By reducing the horizontal velocity of the surveying instrument about the rotating axis, for a defined time period, the change of the vertical difference is reduced, or, for a defined horizontal angle difference, a larger time period is available to adapt the orientation of the surveying instrument in the vertical direction.

In a second preferred version, the surveying instrument is instructed to stop the rotation of the surveying instrument about the rotating axis in case that the vertical difference to the target height is larger than the at least one second vertical range. By stopping the rotation of the surveying instrument about the rotating axis, the orientation of the surveying instrument in the vertical direction can be adapted to the target height as close as possible.

Particularly preferred, the surveying instrument is instructed to reposition the surveying instrument about the rotating axis to repeat at least one of the previous measurements and/or to add at least one further measurement. By reposition of the surveying instrument and by repeating at least one of the previous measurements and/or by adding at least one further measurement, the quality of measuring points can be increased. Preferably, the repeated measurements and/or the added further measurements are performed by the surveying instrument with a reduced horizontal velocity or without a horizontal velocity.

Preferably, in case that the vertical difference to the target height is smaller than the at least one second vertical range, the horizonal velocity of the surveying instrument is kept. As long as the vertical difference to the target height is smaller than the second vertical range, there is no need for adapting the horizonal velocity of the surveying instrument.

According to a further aspect of the present invention, there is provided a computer program product comprising a program code, which is stored on a computer-readable medium and which has computer-executable instructions for performing a method for adapting the orientation of a surveying instrument according to the present invention.

The computer program product is stored on the supervisory device or on a computer-readable medium communicatively connected to the supervisory device, and comprises a program code, which has computer-executable instructions for performing a method for adapting the orientation of a surveying instrument including a first step, a second step, and a third step. In the first step, the supervisory device determines a vertical difference to a target height, and in the second step, the vertical difference is evaluated by the supervisory device to at least one first vertical range. Based on the evaluation, the surveying instrument is instructed to adapt the orientation of the surveying instrument in the vertical direction in the third step, in case that the vertical difference to the target height is larger than the first vertical range.

The term "computer-readable medium" includes, but is not limited to, portable or non-portable storage devices, optical storage devices, and various other mediums capable of storing, containing, or carrying instruction(s) and/or data. Examples of computer-readable media that may be used to store instructions, information used, and/or information created may include, but are not limited to, memory and optical storage media such as random access memory (RAM) such as synchronous dynamic random access memory (SDRAM), read-only memory (ROM) non-volatile random access memory (NVRAM), electrically erasable programmable read-only memory (EEPROM), FLASH memory, magnetic or optical data storage media and the like.

Devices implementing processes and methods can include electronic hardware, computer software, firmware, middleware, microcode, hardware description languages, or any combination thereof, and can take any of a variety of form factors. Typical examples of form factors include laptops, smart phones, mobile phones, tablet devices or other small form factor personal computers, personal digital assistants, rackmount devices, standalone devices, and so on. Functionality described herein also can be embodied in peripherals or add-In cards. Such functionality can also be implemented on a circuit board among different chips or different processes executing in a single device, by way of further example.

According to a further aspect of the present invention, there is provided a system for controlling a surveying instrument, the system comprising:

- the surveying instrument, which includes a distance measuring device configured to measure via a measuring beam a distance, an angle measuring device configured to measure an orientation of the surveying instrument in a vertical direction and/or in a horizontal plane perpendicular to the vertical direction, an azimuth motor device configured to rotate at least a part of the surveying instrument about a rotating axis substantially parallel to the vertical direction, an elevation motor device configured to pivot at least a part of the surveying instrument about a pivoting axis substantially perpendicular to the vertical direction, and a control device configured to control the distance measuring device, angle measuring device, azimuth motor device, and elevation motor device, and
- a supervisory device, which has evaluation, data processing and/or control functionality and is connected communicatively via a communication link to the surveying instrument,

wherein the surveying instrument is configured to rotate about the rotating axis and perform measurements at least of a distance and a vertical angle to a measuring point at least twice and the supervisory device is configured to:

- determine a vertical difference to a target height,
- evaluate the vertical difference to at least one predetermined first vertical range, and
- based on the evaluation, instructing the surveying instrument to adapt the orientation of the surveying instrument in the vertical direction in case that the vertical difference to the target height is larger than the first vertical range.

Preferably, the supervisory device is configured to keep the orientation of the surveying instrument in the vertical direction in case that the vertical difference to the target height is smaller than the first vertical range.

## Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,

FIG. 1 shows a system for controlling a surveying instrument placed in a worksite environment, the system comprising the surveying instrument and a remote controller connected via a communication link to the surveying instrument,

FIGS. 2A, B show an exemplary version of the surveying instrument used in the system of FIG. 1 (FIG. 2A) and a block diagram of the main components of the surveying instrument as illustrated in FIG. 2A (FIG. 2B),

FIGS. 3A, B show an exemplary version of the remote controller used in the system of FIG. 1 (FIG. 3A) and a block diagram of the main components of the remote controller as illustrated in FIG. 3A (FIG. 3B),

FIG. 4 illustrates the formulation of the trigonometric functions to calculate a vertical distance and a horizontal distance of the surveying instrument to a measuring point, and

FIG. 5 shows the deviation of several measuring points in vertical direction to a target height without the use of the method for controlling the surveying instrument.

## Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms. The indefinite articles "a" and "an", as used herein in the specification and in the claims, unless clearly indicated to the contrary, should be understood to mean "at least one". The phrase "and/or", as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of", or, when used in the claims, "consisting of" will refer to the inclusion of exactly one element of a number or list of elements. In general, the term "or" as used herein shall only be interpreted as indicating exclusive alternatives (ke. "one or the other but not both") when preceded by terms of exclusivity, such as "either", "one of", "only one of", or "exactly one of", "consisting essentially of", when used in the claims, shall have its ordinary meaning as used in the field of patent law.

As used herein in the specification and in the claims, the phrase "at least one" in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

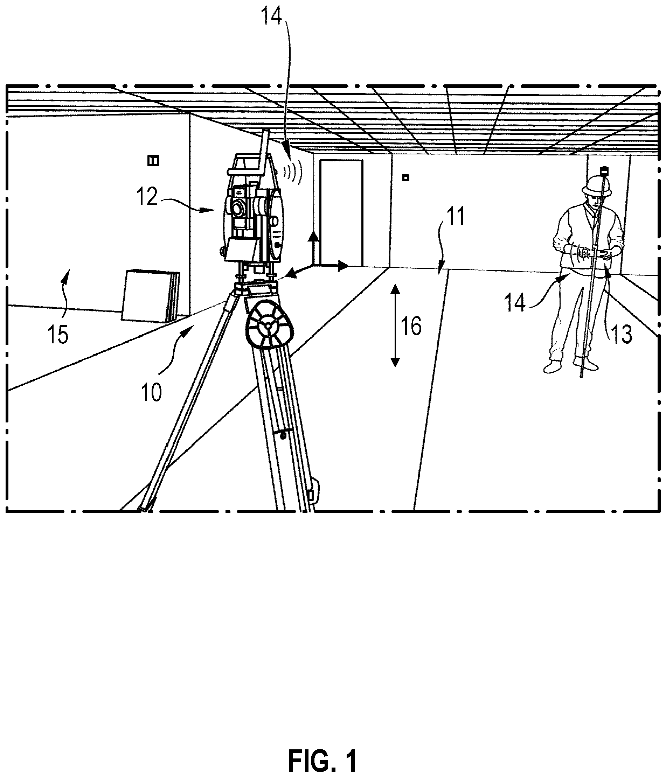

**FIG. 1** schematically illustrates a typical surveying situation in the construction sector as an example of a system **10** for controlling a surveying instrument, which is placed in a worksite environment **11.**

The system 10 comprises a surveying instrument **12** designed as robotic total station and a remote controller **13,** which is communicatively connected via a communication link **14** to the surveying instrument 12. Centered within the robotic total station 12 is its right-handed coordinate frame. The orientation of the coordinate frame CF is usually such that the devices x-axis pointing towards right, y-axis pointing towards the floor and z-axis pointing into forward direction.

Typically, the communication via the communication link 14 between the surveying instrument 12 and remote controller 13 is wireless, such as using WiFi format or Bluetooth format. In FIG. 1, the communication link 14 is depicted as a wireless link, although it certainly could be constructed by use of an electrical cable, an optical cable, or any other type of suitable wired link.

The worksite environment 11 includes a floor, on which the robotic total station 12 is placed, a ceiling, and several bounding surfaces **15,** which are substantially parallel to a vertical direction **16** that is defined to be parallel to a local direction of gravity.

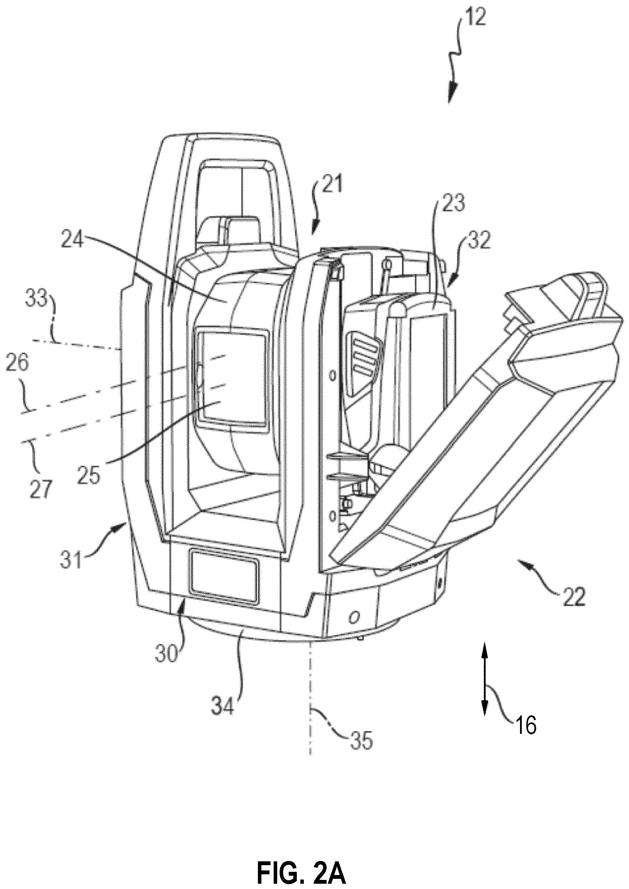

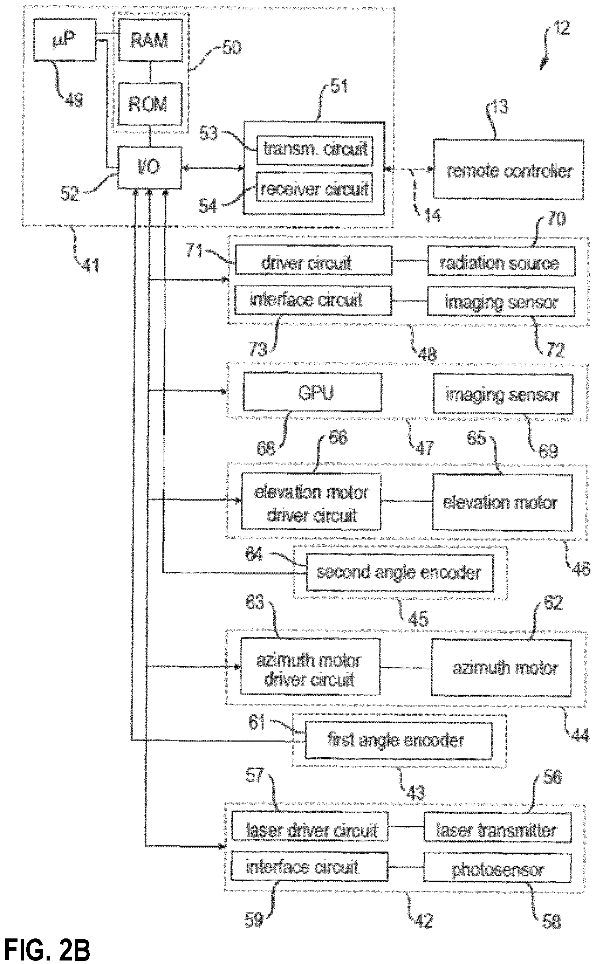

**FIGS. 2A, B** show an exemplary version of the surveying instrument 12 used in the system 10 of FIG. 1 in a perspective view (FIG. 2A) and a block diagram of the main components of the surveying instrument 12 as illustrated in FIG. 2A (FIG. 2B).

The surveying instrument 12 is designed as robotic total station and comprises a measuring head **21,** a main housing **22,** and a battery pack **23** configured to power the surveying instrument 12. The measuring head 21 is enclosed by a housing **24,** which includes an exit window **25.** In the housing 24, a distance measuring device that emits a laser beam **26** and a tracking device that emits optical radiation **27** are arranged. The laser beam 26 and the optical radiation 27 are emitted through the exit window 25 to leave the housing 24.

The laser beam 26 is also called first light beam, and the optical radiation 27 is also called second light beam. The first light beam 26 can be within a first range of wavelengths and can have a first angle of aperture, and the second light beam 27 can be within a second range of wavelengths and can have a second angle of aperture.

The main housing 22 is U-formed and includes a bottom portion **30,** a first side portion **31,** and a second side portion **32.** The measuring head 21 is pivotably mounted to the main housing 22 about a pivoting axis **33** and is arranged between the first side portion 31 and the second side portion 32. The main housing 22 can rotate completely around its circumference at a full 360° angle with respect to a disc **34** about a rotating axis **35.**

An azimuth motor device and a first angle measuring device maybe located in the bottom portion 30 of the main housing 22 and allow to rotate the surveying instrument 12 about the rotating axis 35 and to determine the direction of the laser beam 26 in the horizontal plane perpendicular to the vertical direction 16. An elevation motor device and a second angle measuring device maybe located in the first side portion 31 of the main housing 22 and allow the measuring head 21 to pivot about the pivoting axis 33 and to determine the direction of the laser beam 26 in a vertical plane parallel to the local direction of gravitation 36. To make the surveying instrument 12 fully automatic, it is preferred to include a self-leveling device, which may be arranged in the bottom portion 30 of the main housing 22.

FIG. 2B shows a block diagram of the main components of the surveying instrument 12. The surveying instrument 12 may include a first electronic device **41,** a distance measuring device **42,** a first angle measuring device **43** configured to measure the orientation of the laser beam in the horizontal plane (so-called azimuth angle), an azimuth motor device **44,** a second angle measuring device **45** configured to measure the orientation of the laser beam in the vertical plane (so-called elevation angle), an elevation motor device **46,** an overview camera device **47,** and a tracking device **48** configured to track a target via the surveying instrument 12.

The surveying instrument 12 shown in FIG. 2A is a robotic total station. A total station is called robotic if it is able automatically to follow a target through the worksite environment. To allow following of a target, a robotic total station comes equipped with the azimuth and elevation motor devices 44, 46 for automatically rotating the laser instrument horizontally and vertically, and the tracking device 48 for tracking the target.

The first electronic device 41 comprises a first processing circuit (μP) **49,** a first memory circuit **50** that may include associated random-access memory (RAM) and read only memory (ROM), a first communications circuit **51,** and a first input/output (I/O) interface circuit **52.** The first processing circuit 49, also called control device, may communicate with the first memory circuit 50 and first communications circuit 51 and is configured to control the laser instrument 12. The first communications circuit 51 includes a first transmitter circuit **53** and a first receiver circuit **54** and is configured to be connected to a communications circuit of the remote controller via the communication link. The first input/output interface circuit 52 is an interface between the first processing circuit 49 and the various types of motor driver circuits and sensor circuits of the surveying instrument 12.

The distance measuring device 42 includes a laser transmitter **56,** a laser driver circuit **57,** a photosensor **58,** and a laser receiver interface circuit **59.** The laser driver circuit 57 provides current for the laser transmitter 56 which emits the laser beam 26. The photosensor 58 receives at least a part of the laser beam 26 reflected at a target or a surface of the worksite environment, and the current signal that is outputted by the photosensor 58 is directed to the laser receiver interface circuit 59. After appropriate amplification and demodulation, the signal is sent via the first input/output interface circuit 52 to the first processing circuit 49.

The first angle measuring device 43 includes a first angle encoder **61,** which will provide input signals to the first processing circuit 49, so that it knows exactly in which azimuth angle the laser transmitter 56 is arranged in the horizontal plane; the output signal of the first angle encoder 61 is directed to the first input/output interface circuit 52. The azimuth motor device 44 includes an azimuth motor **62,** which is the motive force to rotate the main housing 22 of the surveying instrument 12 about the first rotating axis 32, and an azimuth motor driver circuit **63,** which will provide the proper current and voltage to drive the azimuth motor 62.

The second angle measuring device 45 includes a second angle encoder **64,** which will provide input signals to the first processing circuit 49, so that it knows exactly in which elevation angle the laser transmitter 56 is arranged in the vertical plane; the output signal of the second angle encoder 64 is directed to the first input/output interface circuit 52. The elevation motor device 46 includes an elevation motor **65,** which is the motive force to pivot the measuring head 21 about the first pivoting axis 30, and an elevation motor driver circuit **66,** which will provide the proper current and voltage to drive the elevation motor 65.

The overview camera device 47 may be arranged in the measuring head 21 of the surveying instrument 12 for capturing an image or a video feed generally in the direction of a sighting axis of the surveying instrument 12. The overview camera device 47 may include optical elements, such as, but not limited to, an objective and a focusing lens, a graphics processing unit (GPU) **68,** and a first imaging sensor **69,** which may comprise or be constituted by a CCD-based sensor, an active pixel-sensor, a CMOS-based sensor, and/or by any other type of suitable imaging sensors.

The tracking device 48 includes an optical radiation source **70,** such as, but not limited to, an infrared (IR) transmitter, a driver circuit **71,** a second imaging sensor **72,** and a receiver interface circuit **73.** The driver circuit 71 provides current for the optical radiation source 70 which emits optical radiation, such as, but not limited to, infrared radiation. The second imaging sensor 72 receives at least a part of the optical radiation reflected at a target, and the current signal that is outputted by the second imaging sensor 72 is directed to the receiver interface circuit 73. After appropriate amplification and processing, the signal is sent via the first input/output interface circuit 52 to the first processing circuit 49 for further processing and/or analyzing. The optical radiation source 70 may be configured to emit modulated optical radiation in accordance with characteristics, such as, but not limited to, a frequency.

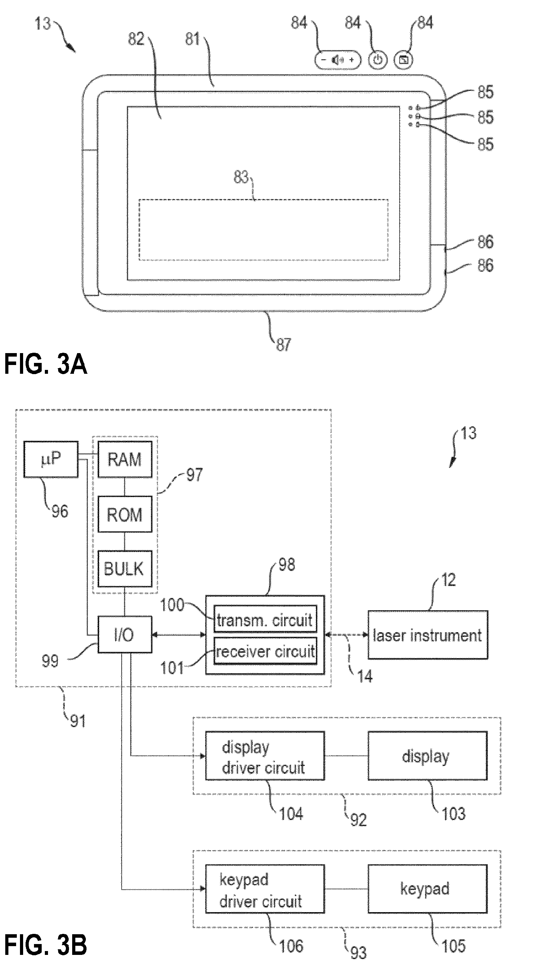

**FIGS. 3A, B** show an exemplary version of the remote controller 13 used in the system 10 of FIG. 1 in a front view (FIG. 3A) and a block diagram of the main components of the remote controller 13 as illustrated in FIG. 3A (FIG. 3B).

The remote controller 13 is designed as tablet computer and includes a housing **81,** a touch screen display **82,** a battery **83,** a set of buttons **84,** e.g., volume control button, power on/off button, and display control button, a set of indicators **85,** e.g., for operating status, data storage status, and battery status, a set of connectors **86,** e.g., for docking, data storage, and USB, and a card slot **87.**

FIG. 3B shows a block diagram of the main components of the remote controller 13. The remote controller 13 may include a second electronic device **91,** a display device **92,** and an input device **93.**

The second electronic device 91 comprises a second processing circuit (μP) **96,** a second memory circuit **97** that may include associated random-access memory (RAM), read only memory (ROM), and some type of bulk memory (BULK), a second communications circuit **98,** and a second input/output (I/O) interface circuit **99.** The second processing circuit 96 may communicate with the second memory circuit 97 and second communications circuit 98 and is configured to control the remote controller 13. The second communications circuit 98 includes a second transmitter circuit **100** and a second receiver circuit **101** and is configured to be connected to the first communications circuit 51 of the laser instrument 12 via the communication link 14. The second input/output interface circuit 99 is an interface between the second processing circuit 96 and the various driver circuits of the remote controller 13.

In the second memory circuit 97, several program codes having computer-executable instructions for performing a method may be stored. The stored program codes may include a program code for performing a method for controlling a surveying instrument and a program code for performing a method for adapting the orientation of a surveying instrument in the vertical direction.

The method for controlling a surveying instrument and the method for adapting the orientation of a surveying instrument are performed by a supervisory device of the system 10, the supervisory device having evaluation, data processing and/or control functionality. In the system 10, the supervisory device is integrated into the second processing circuit 96 of the second electronic device 91 of the remote controller 13. Alternatively, the supervisory device may be integrated into the first processing circuit 49, or into the first and second processing circuits 49, 96, or in any other type of suitable processing circuit or processor, including cloud-based control platforms.

The program code may be executed by a processing circuit or processor, which may include one or more processors, such as one or more digital signal processors (DSPs), general purpose microprocessors, an application specific integrated circuits (ASICS), field programable logic arrays (FPGAs), or other equivalent integrated or discrete logic circuitry. Such a processor may be configured to perform any of the techniques described in this disclosure. A general purpose processor may be a microprocessor; but in an alternative the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

The display device 92 includes a display **103** and a display driver circuit **104.** The display driver circuit will be in communication with the second I/O interface circuit 99 and provides the correct interface and data signals for the display 103. If the remote controller 13 is a laptop computer, for example, then this would be the standard display seen in most laptop computers. Or, if the remote controller 13 is a tablet computer or a smart phone, in which case the display device is a much smaller physical device, the display device 103 could be a touch screen display.

The user-operated input device 93 includes a keypad **105** and a keypad driver circuit **106.** The keypad driver circuit will be in communication with the second I/O interface circuit 99 and controls the signals that interface to the keypad 105. If the display device 103 is a touch screen display, then there may not be a separate keypad on the remote controller 13, because most of the command or data to input functions will be available by touching the display itself and the keypad is integrated in the touch screen display. There may be some type of power on/off button, but that would not necessarily be considered a true keypad and typically would not be used for entering data.

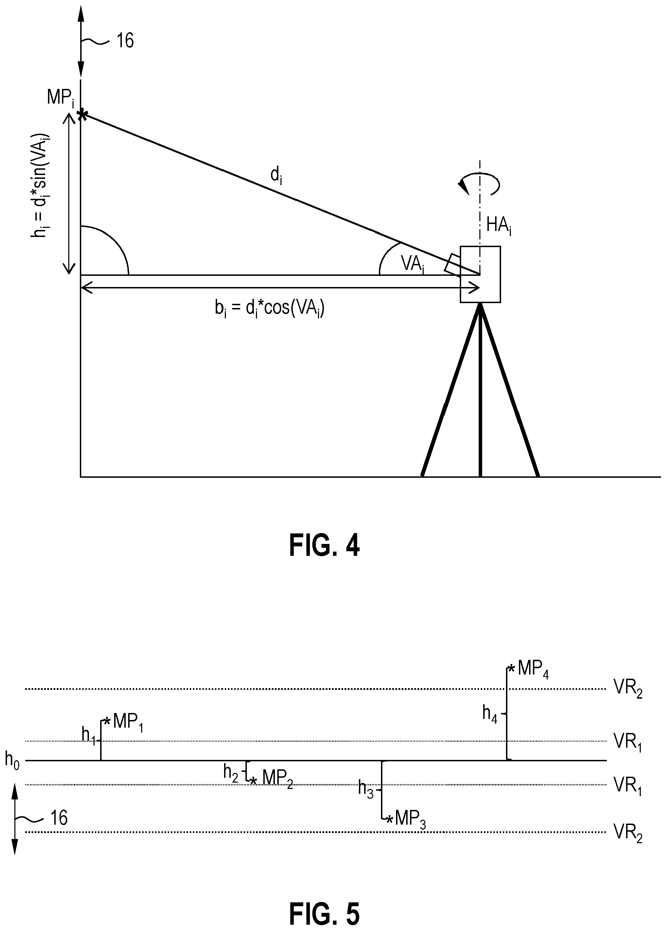

**FIG. 4** illustrates the calculation of a vertical distance and a horizontal distance of the surveying instrument to a measuring point based on trigonometric.

The robotic total station 12 is placed in the worksite environment 11 and the measuring beam is directed onto a bounding surface 15 of the worksite environment 11. The robotic total station 12 is arranged such that the rotating axis 35 is aligned substantially parallel to the vertical direction 16 that is defined by means of the local direction of gravity 36.

A single measurement of a measuring point, delivered by the robotic total station 12 is composed of a triplet of values, namely the angular rotation around the y-axis of the robotic total station 12 referred to as horizontal angle (HA) given by the first angle measuring device 43, the angular rotation around the x-axis of the robotic total station 12 referred to as vertical angle (VA) given by the second angle measuring device 45, and a distance of the robotic total station 12 to the bounding surface of the worksite environment given by the distance measuring device 42.

In an automatic workflow, the robotic total station 12 operates autonomously and the device motion, respectively the sampling process, follows a particular pattern. The robotic total station 12 is set to constantly take measurements during this process, accumulating triplets of measurement values for each individual sample (measuring point), i.e., $HA_i$, $VA_i$, and distance $d_i$. Based on a set of parameters and the physical capabilities of the robotic total station 12, the sampling can be controlled to happen more or less frequently, similarly the robotic total station 12 may rotate about the rotating axis 35 with varying horizontal velocity.

The vertical distance $h_i$ on a plane perpendicular to the x/z-plane of the coordinate frame of the robotic total station 12 can be calculated through the trigonometric formula:

$$h_i = d_i * \sin(VA_i)$$

Similarly, the horizontal distance $b_i$ on a plane parallel to the x/z-plane of the coordinate frame of the robotic total station 12 can be calculated through the trigonometric formula:

$$b_i = d_i * \cos(VA_i)$$

The goal of the adaptive method for controlling the robotic total station 12 is to keep the vertical distance $h_i$ as close as possible to the target height $h_0$, respectively keeping the absolute error abs($e_i$) as close to zero as possible throughout the entire sequence of measurements, i.e., i = 1.. N. To facilitate this, an adjustment to the vertical angle VA is necessary.

To control the orientation of the robotic total station 12 in the vertical direction 16, the target height $h_0$, a first vertical range and a second vertical range are used by the supervisory device 96. After measuring a triplet of measurement values for a measuring point, a vertical difference to the target height $h_0$ can be calculated and evaluated to the first vertical range by the supervisory device 96.

The vertical difference can be a height difference $\Delta h_i$ between the vertical distance $h_i$ and the target height he, a relative height difference $\Delta h_i/D$ between the height difference $\Delta h_i$ and a distance D, and a vertical angle difference $\Delta VA_i$ between the vertical angle $VA_i$ and a vertical angle $VA_0$ corresponding to the target height he. The distance D to calculate the relative height difference $\Delta h_i/D$ can be the measured distance $d_i$ or the horizontal distance $b_i$ in the horizontal plane perpendicular to the vertical direction 16.

In one implementation, the adjustment to the vertical angle $VA_i$ is calculated as a fixed adjustment to the previous vertical angle $VA_{i-1}$, such as

$$\Delta VA = \arcsin\left(\frac{h_0}{d_i}\right) - VA_{i-1}$$

with $h_0$ being the target height and $d_i$ being the current distance, giving the new vertical angle $VA_i$ as

$$VA_i = VA_{i-1} + \Delta VA$$

Due to the boundaries of physics, i.e., a non-zero latency to change the state of a physical object from steady state to a motion state or vice versa without an acceleration or deceleration phase, respectively, it is impossible to apply a correction with absolute mathematical correctness, i.e., the absolute error e becoming zero.

Therefore, in such an implementation, the height controller is applied at custom rotation values $HA_i$, while the rotation around the rotating axis of the robotic total station 12 is stopped. Based on a measurement of $d_i$ and a known $VA_{i-1}$, the height controller is applied to change $VA_i$ appropriately. Given a new measurement $d_{i+1}$ at the same $HA_{i+1} = HA_i$, the adjustment is calculated until the error e approaches zero up to a defined and acceptable deviation g, i.e., until $|e_{i+h}| < g$ for a variable number h of necessary iterations. Afterwards, the rotation around the y-axis, i.e., changing $HA_{i+1}$, is continued.

In another implementation, an uninterrupted constant rotation rHA around the y-axis of the robotic total station 12 is considered. As servo motors can be in a moving state at different velocities, it is more suitable to control the direction and velocity of rotation, rather than setting absolute values. This implementation adjusts the velocity of vertical rotation rVA, i.e., the amount of change of the vertical angle VA over time, in a proportional controller, such that

$$rVA_{i+1} = \frac{1}{b_i} * K * e_i$$

with K being a constant proportional factor, $b_i$ being the horizontal distance and $e_i$ being the current height error.

Due to the boundaries of physics and to additional control latency, a continuous adaption cannot lead to an entirely vanishing error e. Taking this into account, in such an implementation, the resulting error value $e_i$ is constantly monitored, such that it stays within a bounding stripe with a predefined width of $2 * w$ around the target height he, such that $|e_i| < w$. There is no guarantee that this criterion is met at all times, because of sampling of discontinuities in real-world worksite environments or due to surface properties making the measurement process fail.

In case that the vertical difference is larger than the first vertical range, the robotic total station 12 is instructed to adapt its orientation in the vertical direction 16 by pivoting the measuring head about the pivoting axis 33 towards the target height he. In case that the vertical difference is smaller than the first vertical range, no adapting of the orientation of the robotic total station 12 in the vertical direction 16 is necessary and the orientation in the vertical direction 16 is kept.

**FIG. 5** shows the deviation of four measuring points $MP_1$, $MP_2$, $MP_3$, and $MP_4$ in the vertical direction 16 to the target height $h_0$ without the use of the method for adapting the orientation of the surveying instrument 12.

The method for adapting the orientation of the robotic total station 12 comprises that a vertical difference to the target height he is determined and that the vertical difference is evaluated to a predetermined first vertical range **VR$_1$** and additionally to a predetermined second vertical range **VR$_2$** that is larger than the first vertical range $VR_1$. For a vertical difference that is a height difference, the first vertical range $VR_1$ can be in the range of 1 cm, and the second vertical range $VR_2$ in the range of 10 cm.

The vertical difference for the first measuring point $MP_1$ is larger than the first vertical range $VR_1$ and smaller than the second vertical range $VR_2$ so that the orientation of the robotic total station 12 is adapted in the vertical direction 16 without an adaption of the horizontal rotation.

For the second measuring point $MP_2$, the vertical difference is smaller than the first vertical range $VR_1$ and smaller than the second vertical range $VR_2$ so that no adaption of the orientation of the robotic total station 12 is necessary and the orientation is kept.

The vertical difference for the third measuring point $MP_3$ is larger than the first vertical range $VR_1$ and smaller than the second vertical range $VR_2$ so that the orientation of the robotic total station 12 is adapted in the vertical direction 16 without an adaption of the horizontal rotation.

For the fourth measuring point $MP_4$, the vertical difference is larger than the first vertical range $VR_1$ and larger than the second vertical range $VR_2$ so that the orientation of the robotic total station 12 is adapted in the vertical direction 16 with an adaption of the horizontal rotation.

In a first version, the robotic total station 12 can be instructed to reduce the horizontal velocity about the rotating axis 35. By reducing the horizontal velocity of the robotic total station 12 about the rotating axis 35, for a defined time period, the change of the vertical difference is reduced, or, for a defined horizontal angle difference, a larger time period is available to adapt the orientation of the robotic total station 12 in the vertical direction 16.

In a second version, the robotic total station 12 can be instructed to stop the rotation about the rotating axis 35. By stopping the rotation of the robotic total station 12 about the rotating axis 35, the orientation of the robotic total station 12 in the vertical direction 16 can be adapted to the target height $h_0$ as close as possible.

Particularly preferred, the robotic total station 12 can be instructed to reposition about the rotating axis

35 to repeat at least one of the previous measurements and/or to add at least one further measurement. By reposition of the robotic total station 12 and by repeating at least one of the previous measurements and/or by adding at least one further measurement, the quality of measuring points can be increased. Preferably, the repeated measurements and/or the added further measurements are performed by the robotic total station 12 with a reduced horizontal velocity or without a horizontal velocity.

## Claims

1. Method for controlling a surveying instrument (12), the method comprising:

   ▪ Providing the surveying instrument (12), which includes a distance measuring device (42) configured to measure via a measuring beam (26) a distance, an angle measuring device (43, 45) configured to measure an orientation of the surveying instrument (12) in a vertical direction (16) and/or in a horizontal plane perpendicular to the vertical direction (16), an azimuth motor device (44) configured to rotate at least a part of the surveying instrument (12) about a rotating axis (35) substantially parallel to the vertical direction (16), an elevation motor device (46) configured to pivot at least a part of the surveying instrument (12) about a pivoting axis (33) substantially perpendicular to the vertical direction (16), and a control device (49) configured to control the distance measuring device (42), angle measuring device (43, 45), azimuth motor device (44), and elevation motor device (46),
   ▪ Providing a supervisory device (96), which has evaluation, data processing and/or control functionality,
   ▪ Connecting the supervisory device (96) and the surveying instrument (12) communicatively via a communication link (14),
   ▪ Placing the surveying instrument (12) in a worksite environment (11), which includes at least one bounding surface (15), and directing the measuring beam (26) onto one of the bounding surfaces (15), and
   ▪ Starting the surveying instrument (12) to rotate about the rotating axis (35) and perform measurements at least of a distance ($d_i$) and a vertical angle ($VA_i$) to a measuring point ($MP_1$, $MP_2$, $MP_3$, $MP_4$) at least two-times,

   **characterized in that**, while rotating the surveying instrument (12) about the rotating axis (35), a computer program, which has computer-executable instructions for performing a method for adapting the orientation of the surveying instrument (12) in the vertical direction (16), is executed, the method for adapting the orientation of the surveying instrument (12) comprises the steps:

   ▪ Determining a vertical difference to a target height ($h_0$) via the supervisory device (96),
   ▪ Evaluating the vertical difference to at least one predetermined first vertical range ($VR_1$) via the supervisory device (96),
   ▪ Based on the evaluation, instructing the surveying instrument (12) to adapt the orientation of the surveying instrument (12) in the vertical direction (16) in case that the vertical difference to the target height ($h_0$) is larger than the first vertical range ($VR_1$).

2. Method according to claim 1, wherein the orientation of the surveying instrument (12) in the vertical direction (16) is kept in case that the vertical difference to the target height (he) is smaller than the first vertical range ($VR_1$).

3. Method according to any one of claims 1 to 2, wherein the vertical difference to the target height ($h_0$) is one of a height difference ($\Delta h$) between a vertical distance ($h_i$) and the target height ($h_0$), a relative height difference ($\Delta h/D$) between the height difference ($\Delta h$) and a distance (D), and a vertical angle difference ($\Delta VA$) between a vertical angle (VA) and a vertical angle ($VA_0$) corresponding to the target height ($h_0$).

4. Method according to claim 3, wherein the vertical distance ($h_i$) and/or the distance (D) and/or the vertical angle (VA) are determined from at least one of the previous measurements performed by the surveying instrument (12).

5. Method according to any one of claims 3 to 4, wherein the distance (D) to calculate the relative height difference ($\Delta h/D$) is determined from at least one measured distance of the previous measurements, from at least one horizontal distance in the horizontal plane of the previous measurements, and/or from a predicted distance estimated from a model of the worksite environment (11) and the surveying instrument (12), the model being configured for model predictive control.

6. Method according to any one of claims 1 to 5, wherein in case that the vertical difference to the target height (he) is larger than the first vertical range ($VR_1$), the surveying instrument (12) is instructed to pivot about the pivoting axis (33) with a vertical velocity.

7. Method according to claim 6, wherein the vertical velocity is selected to be proportional to the vertical difference.

8. Method according to claim 6, wherein the vertical velocity is selected according to a proportional-integral-derivative-controller using the vertical difference as error value.

9. Method according to any one of claims 1 to 8, wherein the vertical difference to the target height ($h_0$) is additionally evaluated to at least one predetermined second vertical range ($VR_2$) by the supervisory device (96), the second vertical range ($VR_2$) being larger than the first vertical range ($VR_1$).

10. Method according to claim 9, wherein the surveying instrument (12) is instructed to reduce the horizonal velocity of the surveying instrument (12) about the rotating axis (35) in case that the vertical difference to the target height ($h_0$) is larger than the at least one second vertical range ($VR_2$).

11. Method according to claim 9, wherein the surveying instrument (12) is instructed to stop the rotation of the surveying instrument (12) about the rotating axis (35) in case that the vertical difference to the target height ($h_0$) is larger than the at least one second vertical range ($VR_2$).

12. Method according to claim 11, wherein the surveying instrument (12) is instructed to reposition the surveying instrument (12) about the rotating axis (35) to repeat at least one of the previous measurements and/or to add at least one further measurement.

13. Method according to any one of claims 9 to 12, wherein in case that the vertical difference to the target height (he) is smaller than the at least one second vertical range ($VR_2$), the horizonal velocity of the surveying instrument (12) is kept.

14. Computer program product comprising a program code, which is stored on a computer-readable medium and which has computer-executable instructions for performing a method for adapting the orientation of a surveying instrument (12) according to any one of claims 1 to 13.

15. System for controlling a surveying instrument (12), the system comprising:

- the surveying instrument, which includes a distance measuring device (42) configured to measure via a measuring beam (26) a distance, an angle measuring device (43, 45) configured to measure an orientation of the surveying instrument (12) in a vertical direction (16) and/or in a horizontal plane perpendicular to the vertical direction (16), an azimuth motor device (44) configured to rotate at least a part of the surveying instrument (12) about a rotating axis (35) substantially parallel to the vertical direction, an elevation motor device (46) configured to pivot at least a part of the surveying instrument (12) about a pivoting axis (33) substantially perpendicular to the vertical direction, and a control device (49) configured to control the distance measuring device (42), angle measuring device (43, 45), azimuth motor device (44), and elevation motor device (46), and
- a supervisory device (96), which has evaluation, data processing and/or control functionality and is connected communicatively via a communication link (14) to the surveying instrument (12),

wherein the surveying instrument (12) is configured to rotate about the rotating axis (35) and perform measurements at least of a distance ($d_i$) and a vertical angle ($VA_i$) to a measuring point ($MP_1$, $MP_2$, $MP_3$, $MP_4$) at least twice and the supervisory device (96) is configured to:

- determine a vertical difference to a target height ($h_0$),
- evaluate the vertical difference to at least one predetermined first vertical range ($VR_1$), and
- based on the evaluation, instructing the surveying instrument (12) to adapt the orientation of the surveying instrument (12) in the vertical direction (16) in case that the vertical difference to the target height ($h_0$) is larger than the first vertical range ($VR_1$).

16. System according to claim 15, wherein the supervisory device (96) is configured to keep the orientation of the surveying instrument (12) in the vertical direction (16) in case that the vertical difference to the target height (he) is smaller than the first vertical range ($VR,$).

**FIG. 1**

FIG. 2A

FIG. 2B

FIG. 3A

FIG. 3B

16

$h_i = d_i*\sin(VA_i)$

$d_i$

$HA_i$

$VA_i$

MP$_i$

$b_i = d_i*\cos(VA_i)$

**FIG. 4**

*MP$_4$

VR$_2$

$h_4$

$h_1$ *MP$_1$

$h_0$

VR$_1$

$h_2$ *MP$_2$

$h_3$

VR$_1$

16

*MP$_3$

VR$_2$

**FIG. 5**

Europäisches
Patentamt

European
Patent Office

Office européen
des brevets

## EUROPEAN SEARCH REPORT

Application Number

EP 23 18 9901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 014 220 A (KIMURA KAZUAKI [JP]) 11 January 2000 (2000-01-11) | 1-6, 14-16 | INV. G01C5/00 |
| Y | * column 4, lines 23-30, 41-42 *<br>* column 5, lines 20-22, 32-38 *<br>* column 6, lines 52-58, 60-65 *<br>* column 7, lines 15-17, 26-65 *<br>* column 8, lines 1-14 *<br>* column 9, lines 59-63 *<br>* page 10, lines 20-26 *<br>* figure 4 *<br>* figure 14 * | 7-13 | G01C15/00 |
| | ----- | | |
| Y | JP 6 721224 B1 (KINSOKU LTD) 8 July 2020 (2020-07-08) * paragraphs [0009], [0064], [0065], [0079], [0085] * | 7-13 | |
| | ----- | | |

TECHNICAL FIELDS
SEARCHED (IPC)

G01C

The present search report has been drawn up for all claims

| Place of search | Date of completion of the search | Examiner |
|---|---|---|
| The Hague | 15 January 2024 | Nikoli, Revekka |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 18 9901**

This annex lists the patent family members relating to the patent documents cited in the above-mentioned European search report.
The members are as contained in the European Patent Office EDP file on
The European Patent Office is in no way liable for these particulars which are merely given for the purpose of information.

**15-01-2024**

| Patent document cited in search report | | Publication date | Patent family member(s) | | Publication date |
|---|---|---|---|---|---|
| US 6014220 | A | 11-01-2000 | JP | 4087515 B2 | 21-05-2008 |
| | | | JP | H11237244 A | 31-08-1999 |
| | | | US | 6014220 A | 11-01-2000 |
| JP 6721224 | B1 | 08-07-2020 | JP | 6721224 B1 | 08-07-2020 |
| | | | JP | 2021085768 A | 03-06-2021 |

EPO FORM P0459

For more details about this annex : see Official Journal of the European Patent Office, No. 12/82